# EUROPÄISCHE PATENTANMELDUNG

(11) **EP 0 787 917 A2**
(43) Veröffentlichungstag der Anmeldung: **06.08.1997**
(21) Anmeldenummer: 97250010.2
(22) Anmeldetag: 24.01.1997
(51) Int. Cl.: F16C 35/063

(54) **Vorrichtung zum lösbaren axialen Festlegen von Lagern**

(30) Priorität: 05.02.1996 DE 19605034
(71) Anmelder: MANNESMANN Aktiengesellschaft, 40213 Düsseldorf (DE)
(72) Erfinder: Hansen, Manfred, Dipl.-Ing., 40597 Düsseldorf (DE)
(74) Vertreter: Meissner, Peter E., Dipl.-Ing.

(57) **Zusammenfassung**

Die Erfindung betrifft eine Vorrichtung zum lösbaren axialen Festlegen eines Lagers mit dessem Gehäuse auf einem Lagerzapfen, insbesondere auf dem Walzenzapfen einer Walzwerkswalze, wobei das Lager stirnseitig durch eine auf den Zapfen aufgeschobene Ringbuchse gehalten wird, die mit einem Außengewinde versehen ist, das mit dem Innengewinde einer die Ringbuchse teilweise umgreifenden Ringmutter korrespondiert, durch deren Verdrehen die Ringbuchse axial verschiebbar ist, wobei die Ringmutter -sich gegen einen in einer Umfangsnut am freien Zapfenende festgelegten Widerlagerring abstützend- die Ringbuchse mit seiner Stirnseite gegen das Lager verspannt. Dabei ist der Widerlagerring (7) auf der dem Lager (3) abgewandten Seite der Umfangsnut (6) auf das Zapfenende (Z) aufschiebbar und mit am Umfang verteilt angeordneten,gegen die Wirkung von Federelementen (9) radial in die Umfangsnut (6) einschwenkbaren und dort in der Fixierstellung des Widerlagerringes (7) festhaltbaren Klauen (8) in dieser Lage axial fixierbar.

## Beschreibung

Die Erfindung betrifft eine Vorrichtung zum lösbaren axialen Festlegen eines Lagers mit dessem Gehäuse auf einem Lagerzapfen, insbesondere auf dem Walzenzapfen einer Walzwerkswalze, wobei das Lager stirnseitig auf einer auf dem Zapfen aufgeschobenen Ringbuchse gehalten wird, die mit einem Außengewinde versehen ist und mit dem Innengewinde einer die Ringbuchse teilweise umgreifenden Ringmutter korrespondiert, durch deren Verdrehen die Ringbuchse axial verschiebbar ist, wobei die Ringmutter - sich gegen einen in einer Umfangsnut am freien Zapfenende am festgelegten Widerlagerring abstützend - die Ringbuchse mit seiner Stirnseite gegen das Lager verspannt. Des weiteren betrifft die Erfindung eine Montagevorrichtung zum automatischen Lösen und axialen Festlegen eines solchen Lagers. Eine derartige Vorrichtung ist aus der DE-AS 1577125 bekannt.

Zur axialen Fixierung von Lagern mit deren Gehäusen auf den Zapfen von Wellen oder Achsen gibt es zahlreiche Lösungen. Häufig besteht die Aufgabe, die Lager in kurzer Zeit auszubauen und zu wechseln, was bisher immer spezielle Handeingriffe notwendig macht. Insbesondere bei Walzwerkswalzenlagerungen, bei denen ein Lagerwechsel in hoher Frequenz notwendig ist, ist diese Arbeit nur mit zahlreichem und speziell geschultem Personal zu bewältigen. Dies ist insbesondere dann schwierig, wenn die Teile ab einer bestimmten Lagergröße schwer und unhandlich sind, so daß der Lagerwechsel häufig nicht reibungslos stattfindet.

Zur Festlegung der Lager ist es üblich, am Umfang geteilte und klappbare Widerlagerringe vorzusehen, die in eine Umfangsnut am freien Zapfenende eingelegt und dort verbolzt werden. Das Entfernen dieser Widerlagerringe nach Lösen der mechanischen Verbindung ist allerdings äußerst unfallträchtig, trotzdem es die häufigste Ausführung zum Festlegen der Lager ist.

Lösungen zum Festlegen der Lager mittels Bajonettverschlüssen mit hydraulischer Verspannung sind zwar gleichfalls bekannt, doch sind diese Lösungen sehr kompliziert, weil sich das Bajonett an jeder Walze befinden muß und das Drehen und die Sicherung des Bajonetts Handarbeit bleibt. Aus diesem Grund haben sich wegen der hohen Kosten die letzteren Ausführungen nur bei extrem großen Lagern, insbesondere von Stützwalzen, durchsetzen können.

Ein weitere Forderung, die darin besteht, die losen Teile im demontierten Zustand zusammenzuhalten, können nicht alle Lösungen sicherstelle.

Ausgehend von der geschilderten Problematik besteht die Aufgabe der vorliegenden Erfindung darin, eine die Gesamtlösung für die lösbare axiale Festlegung von gattungsgemäß beschriebenen Lagern zu schaffen, die mit einfachen Mitteln mechanisiert und automatisiert werden kann. Es sollen beim Demontieren keine losen Teile anfallen und alle Teile sollen im gelösten und vom Lagerzapfen abgezogenen Zustand zentriert bleiben. Darüber hinaus besteht die Forderung, die Vorrichtung so auszuführen, daß sie auf üblichen Lager- bzw. Walzenzapfen mit Umfangsnut aufsetzbar sind.

Zur Lösung der Aufgabe wird erfindungsgemäß vorgeschlagen, daß der Widerlagerring auf der dem Lager abgewandten Seite der Umfangsnut auf das Zapfenende aufschiebbar und mit am Umfang verteilt angeordneten, radial in die Umfangsnut einschwenkbaren Klauen in dieser Lage axial fixierbar ist.

Der bekannte und übliche Klappring, der in die Umfangsnut eingelegt wurde, wird erfindungsgemäß durch einen auf das Zapfenende aufsetzbaren Widerlagerring ersetzt, der sich mit ein- und ausschwenkbaren Klauen in der vorhandenen Umfangsnut festklammert. Damit entfällt nicht nur das unfallträchtige Aufklappen der bekannten Widerlagerringe, es wird auch die Möglichkeit geschaffen, den in sich geschlossenen Widerlagerring mechanisch auf den Lagerzapfen aufzuschieben und dort durch Einschwenken der Klauen zu befestigen.

In einer vorteilhaften Ausgestaltung der Erfindung ist vorgesehen, daß die Klauen gegen die Wirkung von Federelementen in die Umfangsnut einschwenkbar sind und dort in der Fixierstellung des Widerlagerringes festhaltbar sind. Die Federelemente bewirken ein Öffnen der Klauen und ein Freigeben des Widerlagerringes beim Abziehen des Lagers auf selbsttätige Weise, so daß die Fixierung des Widerlagerringes nur dann erfolgt, wenn die Klauen in der eingeschwenkten Stellung gehalten sind.

Zum Festhalten der Klauen in der Umfangsnut ist nach einem weiteren Merkmal der Erfindung vorgesehen, daß an der dem Zapfenende zugewandten Stirnseite der Ringmutter ein die Klauen mindestens teilweise hintergreifender Vorsprung vorgesehen ist. Dieser Vorsprung verhindert ein Auseinanderspreizen und Herausschwenken der Klauen aus der Umfangsnut.

Alternativ kann vorgesehen werden, daß zum Festhalten der Klauen in der Umfangsnut an der dem Zapfenende zugewandten Stirnseite der Ringmutter ein Rücksprung vorgesehen ist, in den die Klauen mindestens teilweise eingreifen. Ein solcher Rücksprung kann beispielsweise als Nut ausgeführt sein, in die Vorsprünge der Klauen formschlüssig eingreifen.

In einer vorteilhaften Weiterbildung der Erfindung ist vorgesehen, daß die Ringbuchse mit einem sich radial und koaxial nach außen erstreckenden Bund einen am Gehäuse befestigten Lagerdeckel auf der der Ringmutter abgewandten Seite hintergreift, der seinerseits - mindestens in der Ausbaustellung - mit einem sich auf seiner der Ringmutter zugewandten Seite koaxial erstreckenden Zentriervorsprung die Ringmutter zentrierend umgreift. Der sich an der Ringbuchse erstreckende Bund begrenzt die axiale Bewegung und verhindert ein Auseinanderfallen des Lagers, wenn dieses axial verschoben wird. Durch diese Konstellation kann das Lager zusammen mit dem Gehäuse vom Lagerzapfen abgezogen und aufgeschoben werden.

Nach einer weiteren Ausgestaltung der Erfindung ist vorgesehen, daß zwischen Ringmutter und Widerlager achsparallel wirkende Spreizelemente angeordnet sind, durch die im entriegelten Zustand der Klauen diese aus dem Wirkbereich des die Klauen hintergreifenden Vorsprunges bringbar sind. Die Spreizelemente, beispielsweise in Form von Federn, bewirken das permanente Auseinanderdrücken von Widerlagerring und Ringmutter in Achsrichtung, damit bei gelösten Klauen diese aus dem Bereich der Vorsprünge an der Ringmutter gelangen und aus der Umfangsnut herausschwenken können. Gleichzeitig können die Spreizelemente mit achsparallelen Bolzen in Verbindung stehen, die einerseits an der Ringmutter und andererseits am Widerlagerring angelenkt sind und ein Auseinanderfallen der Teile beim Abziehen des Lagers verhindern.

Eine Montagevorrichtung zum automatischen Lösen und axialen Festlegen eines Lagers mit der erfindungsgemäßen Befestigungsvorrichtung ist gekennzeichnet durch eine axial verschiebbare, die Ringmutter koaxial umgreifende drehbare Muffe, deren Innenumfangsfläche die Klauen des Widerlagerringes beim Aufschieben der Muffe in die Umfangsnut des Zapfens verschwenkt und die in aufgeschobener Stellung mit einer Innenverzahnung in eine Außenverzahnung der Ringmutter eingreift. Die Muffe gestattet nach dem Aufschieben der aus Lager und Gehäuse, Ringmutter und Ringbuchse sowie Widerlagerring bestehenden Einheit ein Schließen der Klauen über die Innenumfangsfläche der Muffe und ein Verdrehen der Ringmutter über die vorgesehene Außenverzahnung, die mit der Innenverzahnung an der Muffe korrespondiert. Beim Verdrehen der Ringmutter entfernen sich Ringmutter und Ringbuchse so lange voneinander, bis die Ringmutter stirnseitig gegen die Klauen gelegt ist und über die Verzahnung zwischen Ringmutter und Ringbuchse letztere gegen das Lager gedrückt hat. Alle axialen Schraubbewegungen werden durch mechanische Teile begrenzt, eine Wegerfassung ist nicht erforderlich. Die gelösten Teile bleiben auch ohne Zusatzgeräte zentriert, was eine unabdingbare Voraussetzung für den automatischen Betrieb einer erfindungsgemäßen Vorrichtung ist. Die Vorrichtung bedingt keine Sonderbearbeitung der Achsen bzw. der Walzenzapfen; Zusatzmedien, welche separat anzuschließen sind, werden nicht benötigt.

Ein Ausführungsbeispiel der Erfindung ist in der Zeichnung dargestellt und wird nachfolgend beschrieben. Es zeigt:
Figur 1 die erfindungsgemäße Vorrichtung in einem Längsschnitt,
Figur 2 die Vorrichtung nach Figur in abgezogener Stellung,
Figur 3 einen Querschnitt durch den Widerlagerring.

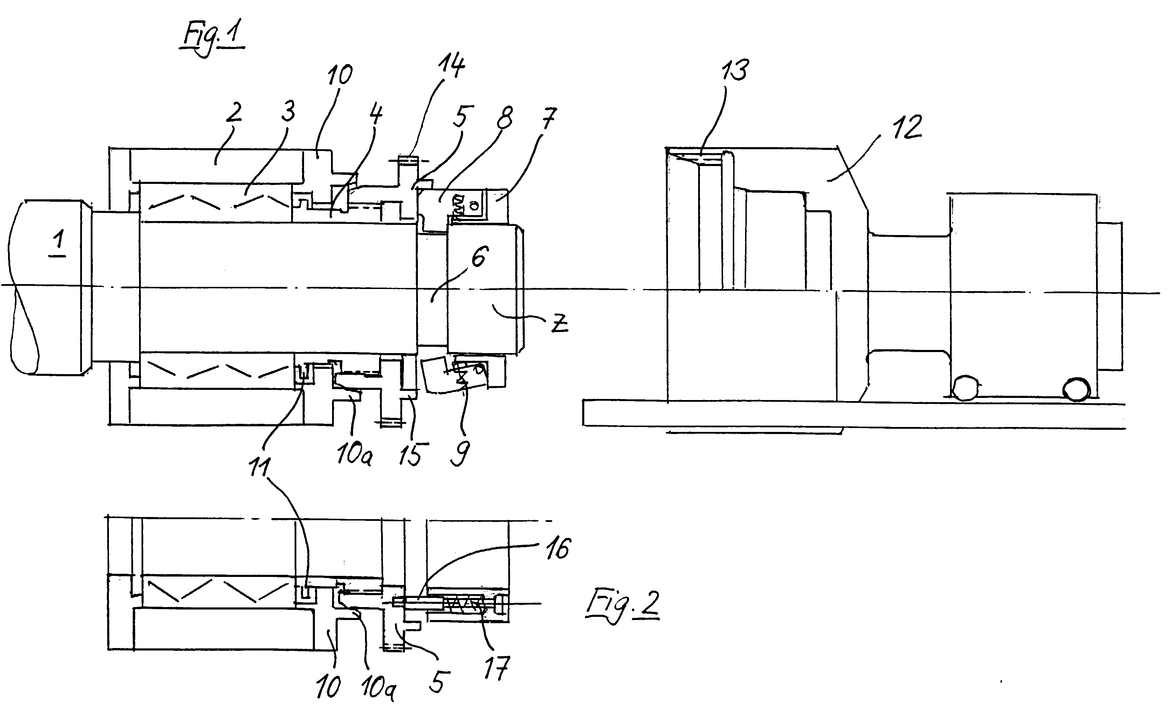

In Figur 1 ist mit 1 eine Walze bezeichnet, auf deren Zapfen ein Lager 3 aufgeschoben ist, das in einem Gehäuse 2 gelagert ist. Das Lager 3 ist axial von einer Ringbuchse 4 gehalten, die ein Außengewinde trägt und durch Drehen einer Ringmutter 5 axial zum Zapfen verschoben werden kann. Die Ringmutter 5 ist gegen einen Widerlagerring 7 axial gesichert, in dem, auf dem Umfang verteilt, mehrere ein- und ausschwenkbare Klauen 8 gelagert sind. Federn 9 drücken diese Klauen ständig nach außen, also in die entriegelte Stellung. In der unteren Zeichnungshälfte der Figur 1 sind die Klauen 8 geöffnet dargestellt.

Ringbuchse 4 und Ringmutter 5 sind soweit wie möglich ineinander gedreht, bis die Ringflächen x-x gegeneinander liegen. Alle Verriegelungsteile 4, 5, 7, 8 und 9 sind dadurch zentriert, daß die Ringbuchse 4 an der Stelle y-y im feststehenden Gehäusedeckel 10 zentriert ist.

Damit die ganze Ringeinheit nicht nach rechts vom Lager 3 weggezogen werden kann, ohne auseinanderzufallen, ist die axiale Bewegung der Ringbuchse durch einen Bund 11 begrenzt. In dieser Konstellation kann das Lager 3 mit dem Gehäuse 2 vom Lagerzapfen abgezogen oder aufgeschoben werden.

Nach dem Aufschieben wird eine axial verschiebbare Muffe 12 über den Widerlagerring 7 geschoben und schließt dabei die Klauen 8, welche in die Umfangsnut 6 einschwenken. Vorzugsweise ist die Muffe 12 drehbar und greift mit einer Verzahnung 13 in die Verzahnung 14 der Ringmutter 5 ein. Durch Drehen der Ringmutter 5 werden Ringmutter 5 und Ringbuchse 4 so lange voneinander entfernt, bis sich die Ringmutter 5 axial gegen die geschlossenen Klauen 8 legt. Ein stirnseitiger Vorsprung 15 an der Ringmutter zentriert die Bauteile und hält die Klauen 8 geschlossen. Die Zentrierung y-y gegen den feststehenden Gehäusedeckel 10 ist gelöst. Wird die Muffe 12 jetzt zurückgezogen, können sich die Klauen 8 nicht mehr öffnen. Dieser Zustand ist in Figur 1 in der oberen Zeichnungshälfte dargestellt, die Lagerung ist gebrauchsfertig montiert.

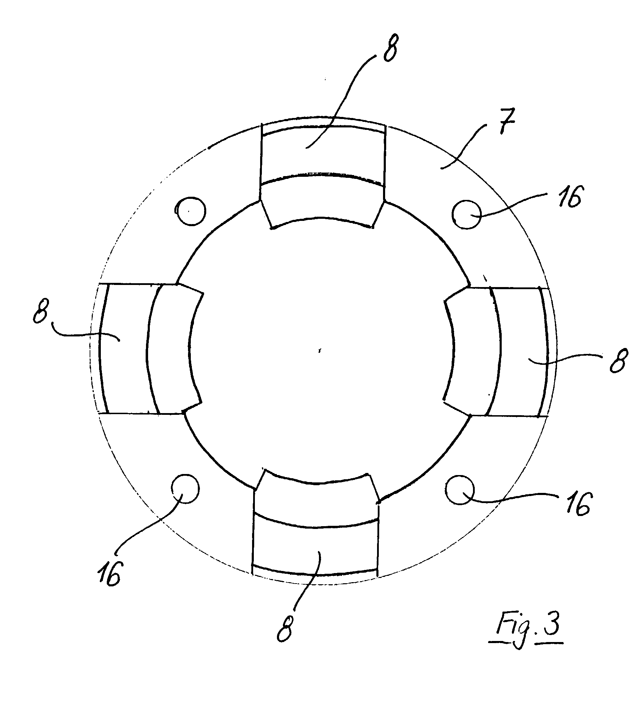

Damit der Widerlagerring 7 im gelösten Zustand nicht zum losen Teil wird, ist er, wie auch aus Figur 3 ersichtlich, mit der Ringmutter 5 über mehrere Bolzen 16 verbunden. Über einen Teil der Bolzen sind Federn 17 geschoben, die die Ringmutter 5 und den Widerlagerring permanent auseinanderdrücken. Auf diese Weise gelangen die Klauen 8 in Ausbaustellung aus dem Bereich der Vorsprünge 15 und können mit Hilfe der Federn 9 nach außen schwenken.

Die Montage und Demontage eine derartig ausgeführten erfindungsgemäßen Vorrichtung kann ohne Handgriffe und ohne Kontrolle automatisiert werden.

## Patentansprüche

1. Vorrichtung zum lösbaren axialen Festlegen eines Lagers mit dessem Gehäuse auf einem Lagerzapfen, insbesondere auf dem Walzenzapfen einer Walzwerkswalze, wobei das Lager stirnseitig durch eine auf den Zapfen aufgeschobene Ringbuchse gehalten wird, die mit einem Außengewinde versehen ist, das mit dem Innengewinde einer die Ringbuchse teilweise umgreifenden Ringmutter korrespondiert, durch deren Verdrehen die Ringbuchse axial verschiebbar ist, wobei die Ringmutter -sich gegen einen in einer Umfangsnut am freien Zapfenende festgelegten Widerlagerring abstützend- die Ringbuchse mit seiner Stirnseite gegen das Lager verspannt,
dadurch gekennzeichnet,
daß der Widerlagerring (7) auf der dem Lager (3) abgewandten Seite der Umfangsnut (6) auf das Zapfenende (Z) aufschiebbar und mit am Umfang verteilt angeordneten, gegen die Wirkung von Federelementen (9) radial in die Umfangsnut (6) einschwenkbaren und dort in der Fixierstellung des Widerlagerringes (7) festhaltbaren Klauen (8) in dieser Lage axial fixierbar ist.

2. Vorrichtung zum lösbaren axialen Festlegen eines Lagers mit dessem Gehäuse auf einem Lagerzapfen nach Anspruch 1 und 2,
dadurch gekennzeichnet,
daß zum Festhalten der Klauen (8) in der Umfangsnut (6) an der dem Zapfenende (Z) zugewandten Stirnseite der Ringmutter (5) ein die Klauen (8) mindestens teilweise hintergreifender Vorsprung (15) vorgesehen ist.

3. Vorrichtung zum lösbaren axialen Festlegen eines Lagers mit dessem Gehäuse auf einem Lagerzapfen nach Anspruch 1 und 2,
dadurch gekennzeichnet,
daß zum Festhalten der Klauen (8) in der Umfangsnut (6) an der dem Zapfenende (Z) zugewandten Stirnseite der Ringmutter (5) ein Rücksprung vorgesehen ist, in den die Klauen mindestens teilweise eingreifen.

4. Vorrichtung zum lösbaren axialen Festlegen eines Lagers mit dessem Gehäuse auf einem Lagerzapfen nach Anspruch 1 bis 3,
dadurch gekennzeichnet,
dadurch gekennzeichnet,
daß die Ringbuchse (4) mit einem sich radial und koaxial nach außen erstreckenden Bund (11) einen am Gehäuse (2) befestigten Lagerdeckel (10) auf der der Ringmutter (5) abgewandten Seite hintergreift, der seinerseits - mindestens in der Ausbaustellung- mit einem sich auf seiner der Ringmutter (5) zugewandten Seite koaxial erstreckenden Zentriervorsprung (10a) die Ringmutter (5) zentrierend umgreift.

5. Vorrichtung zum lösbaren axialen Festlegen eines Lagers mit dessem Gehäuse auf einem Lagerzapfen nach Anspruch 1 bis 4,
dadurch gekennzeichnet,
daß zwischen Ringmutter (5) und Widerlagerring (7) achsparallel wirkende Spreizelemente (16,17) angeordnet sind, durch die im entriegelten Zustand der Klauen (8) diese aus dem Wirkbereich des die Klauen (8) hintergreifenden Vorsprunges (15) bringbar sind.

6. Verfahren zur Montage einer Vorrichtung zum automatisierten Lösen und axialen Festlegen eines Lagers mit dessem Gehäuse auf einem Lagerzapfen, nach einem der Ansprüche 1 bis 5
dadurch gekennzeichnet,
daß nach dem Aufschieben des Widerlagerringes eine axial verschiebbare und verdrehbare Muffe über den Widerlagerring geschoben wird, dabei mit ihrer Innenoberfläche die Klauen in die Umfangsnut einschwenkt und anschließend die Muffe solange verdreht wird, bis eine in der Muffe vorgesehene Innenverzahnung in die Außenverzahnung der Ringmutter ein greift und durch weiteres Verdrehen der Muffe die Ringmutter und die Ringbuchse voneinander entfernt werden, bis sich die Ringmutter axial gegen die geschlossenen Klauen legt und ein stirnseitiger Vorsprung an der Ringmutter die Klauen geschlossen hält.
